(19) Europäisches Patentamt / European Patent Office / Office européen des brevets

(11) **EP 3 257 165 B1**

(12) **EUROPEAN PATENT SPECIFICATION**

(45) Date of publication and mention of the grant of the patent:
**12.12.2018 Bulletin 2018/50**

(21) Application number: **15704517.0**

(22) Date of filing: **11.02.2015**

(51) Int Cl.:
*H04B 3/32* (2006.01)    *H04M 11/06* (2006.01)
*H04W 88/08* (2009.01)   *H04L 27/26* (2006.01)
*H04L 5/00* (2006.01)    *H04L 25/02* (2006.01)
*H04L 25/03* (2006.01)   *H04B 3/487* (2015.01)

(86) International application number:
**PCT/EP2015/052888**

(87) International publication number:
**WO 2016/128045 (18.08.2016 Gazette 2016/33)**

(54) **METHODS AND NODES OF A WIRELESS COMMUNICATION NETWORK FOR MITIGATING CROSSTALK IN A DISTRIBUTED BASE STATION SYSTEM**

VERFAHREN UND KNOTEN EINES DRAHTLOSKOMMUNIKATIONSNETZWERKS ZUR VERRINGERUNG DES ÜBERSPRECHENS IN EINEM VERTEILTEN BASISSTATIONSSYSTEM

PROCÉDÉS ET NOEUDS D'UN RÉSEAU DE COMMUNICATION SANS FIL DESTINÉS À ATTÉNUER LA DIAPHONIE DANS UN SYSTÈME DE STATION DE BASE DISTRIBUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2017 Bulletin 2017/51**

(73) Proprietor: **Telefonaktiebolaget LM Ericsson (publ)**
**164 83 Stockholm (SE)**

(72) Inventors:
• **LINS DE MEDEIROS, Eduardo**
**174 63 Sundbyberg (SE)**
• **ERIKSSON, Per-Erik**
**S-116 37 Stockholm (SE)**
• **HUANG, Yezi**
**S-169 69 Solna (SE)**
• **LU, Chenguang**
**S-191 63 Sollentuna (SE)**

(74) Representative: **Zacco Sweden AB**
**P.O. Box 5581**
**114 85 Stockholm (SE)**

(56) References cited:
**EP-A1- 2 736 210    WO-A1-2015/002584**

• **JONATHAN GAMBINI ET AL: "Wireless over cable for femtocell systems", IEEE COMMUNICATIONS MAGAZINE, IEEE SERVICE CENTER, PISCATAWAY, US, vol. 51, no. 5, 1 May 2013 (2013-05-01), pages 178-185, XP011508758, ISSN: 0163-6804, DOI: 10.1109/MCOM.2013.6515063**

## Description

Technical field

The present disclosure relates generally to methods, nodes and computer programs of a wireless communication network for mitigating crosstalk in a base station system. More specifically, the disclosure relates to a base station system comprising a baseband unit connected to an intermediate radio unit which in turn is connected to a plurality of radio heads via a plurality of metallic conductors, and the methods, nodes and computer programs are for mitigating crosstalk over the metallic conductors in the base station system.

Background

Mass-deployment of small cells is a candidate solution for solving the ever-increasing bandwidth demands on wireless communication networks. By employing coordination among macro cells and small cells, such as micro, pico and femto cells, operators can provide good coverage and a high quality mobile broadband experience to pieces of user equipment, UEs, which camp on the network.

A recent enabler for solving the increasing bandwidth demands is a system called Radio Dot System, RDS. The RDS enables operators to utilize LAN cables like CAT6/7 for indoor radio deployments. This system improves over older distributed antenna systems by providing streamlined installation procedures, low cost and energy efficiency. The RDS is a distributed base station system wherein the base station functionality is separated in different nodes called a baseband unit, BBU, in which signal treatment in the baseband frequency area is performed, an intermediate radio unit, IRU, which is arranged to receive (in the downlink direction) the baseband signals from the BBU, convert them to an intermediate frequency and distribute the signals to a destined radio head, RH, (also called the radio dot) of a plurality of RHs connected via dedicated cables to the IRU. The RH then up-converts the received intermediate frequency signal to a radio frequency for radio transmission from an antenna of the RH towards UEs being in radio connection with the RH. As a further application of the RDS, there is a new initiative extending RDS into residential domain reusing existing telephony twisted-pair cable infrastructure between the IRU and the RHs, which are also used by today's Digital Subscriber Line, DSL. The basic idea is to transfer radio signals in lower frequency at DSL spectrum range, for example below 200 MHz

However, the twisted-pairs in the same cable bundle are subjected to crosstalk. The crosstalk can reduce the signal to noise ratio, SNR, significantly. This will result in reduced bandwidth and reach of the residential RDS. Crosstalk cancellation/mitigation is needed to increase the performance. WO 2015/002584 A1 discloses a method performed in a radio node operable in a base station system of a wireless communication network for reducing interference at the radio unit. This is also addressed in an article by Gambini et al. with the title "Wireless over cable for femtocell systems", published in IEEE COMMUNICATIONS MAGAZINE, vol. 51, no 5, 1 May 2013, pages 178-185. EP 2736210 discloses a method for controlling communication over a plurality of subscriber lines.

Summary

It is an object of the invention to address at least some of the problems and issues outlined above. It is another object to reduce the influence of crosstalk between cables of a distributed base station system in a wireless communication system. It is possible to achieve these objects and others by using a method and an apparatus as defined in the attached independent claims.

According to one aspect, a method is provided for mitigating crosstalk performed by a network node of a wireless communication network operable in a base station system of the wireless communication network. The base station system comprises an intermediate radio unit, IRU, a baseband unit, BBU connected to the IRU, and a plurality of radio heads, RHs, connected to the IRU via a plurality of metallic conductors. The method comprises receiving from a first of the plurality of RHs, a measure of an error of one or more symbols of a signal received by the first RH from the IRU over a first of the plurality of metallic conductors, the measure of the error being detected by the first RH, the signal being destined to a user equipment, UE, wirelessly connected to the first RH. The method further comprises determining precoding coefficients for a precoder according to the received error measure, and triggering applying the determined precoding coefficients when sending further signals to the first RH over the first of the plurality of metallic conductors, the further signals being destined to UEs wirelessly connected to the first RH. The method further comprises triggering sending, to the first of the plurality of RHs, the signal destined to the UE connected to the first of the plurality of RHs, and triggering sending, to a second of the plurality of RHs, a signal destined to a UE connected to the second of the plurality of RHs, the signal sent to the second RH comprising a reference signal symbol, wherein the signal sent to the first RH and the signal sent to the second RH are sent in the same frequency and time slot.

According to another aspect, a method is provided performed by a first RH operable in a base station system of a wireless communication network, for mitigating crosstalk. The base station system comprises an IRU, a BBU connected to the IRU, and a plurality of RHs including the first RH, the plurality of RHs being connected to the IRU via a plurality of metallic conductors. The method comprises receiving, from the IRU over a first of the plurality of metallic conductors, a signal destined to a UE wirelessly connected to the first RH, the signal comprising one or more symbols. The method further comprises detecting, from the received one or more symbol, a measure of an error of the one or more symbol and sending, to the IRU, the measure of the one or more symbol error, for further determining of precoding coefficients for a pre-coder of the IRU based on the received measure of symbol error, wherein the one and more symbol is a reference signal symbol.

According to another aspect, a network node is provided, operable in a wireless communication network and configured to mitigate crosstalk of a base station system. The base station system comprises an IRU, a BBU connected to the IRU, and a plurality of RHs connected to the IRU via a plurality of metallic conductors. The network node comprises a processor and a memory. The memory contains instructions executable by said processor, whereby the network node is operative for receiving from a first of the plurality of RHs, a measure of an error of one or more symbols of a signal received by the first RH from the IRU over a first of the plurality of metallic conductors, the measure of the error being detected by the first RH, the signal being destined to a UE, wirelessly connected to the first RH, updating precoding coefficients for a precoder according to the received error measure, and triggering applying the determined precoding coefficients when sending further signals to the first RH over the first of the plurality of metallic conductors, the further signals being destined to UEs wirelessly connected to the first RH, triggering sending, to the first of the plurality of RHs, the signal destined to the UE connected to the first of the plurality of RHs, and triggering sending, to a second of the plurality of RHs, a signal destined to a UE connected to the second of the plurality of RHs, the signal sent to the second RH comprising a reference signal symbol, wherein the signal sent to the first RH and the signal sent to the second RH are sent in the same frequency and time slot.

According to another aspect, a first RH is provided, operable in a base station system of a wireless communication network and configured to contribute in mitigating crosstalk. The base station system comprises an IRU, a BBU connected to the IRU, and a plurality of RHs including the first RH, the plurality of RHs being connected to the IRU via a plurality of metallic conductors. The first RH comprises a processor and a memory. The memory contains instructions executable by said processor, whereby the first RH is operative for receiving, from the IRU over a first of the plurality of metallic conductors, a signal destined to a UE wirelessly connected to the first RH, the signal comprising one or more symbols, detecting, from the received one or more symbol, a measure of an error of the one or more symbol, and sending, to the IRU, the measure of the one or more symbol error, for further updating of precoding coefficients for a precoder based on the received measure of symbol error, wherein the one and more symbol is a reference signal symbol.

According to other aspects, computer programs and carriers are also provided, the details of which will be described in the claims and the detailed description.

Further possible features and benefits of this solution will become apparent from the detailed description below.

Brief description of drawings

The solution will now be described in more detail by means of exemplary embodiments and with reference to the accompanying drawings, in which:

Fig. 1 is a schematic block diagram of a base station system in which the present invention may be used.

Fig 2 is a schematic view of an exemplary cellular communication network to which coverage is provided by the base station system.

Fig. 3 is a flow chart illustrating a method performed by a network node, according to possible embodiments.

Fig. 4 is a flow chart illustrating a method performed by an RH, according to possible embodiments.

Fig. 5 is a schematic block diagram of a RH according to a possible embodiment.

Fig. 6 is a schematic block diagram of an IRU according to a possible embodiment.

Fig. 7 is a schematic block diagram of a DSP of an RH according to a possible embodiment.

Figs 8a and 8b are tables illustrating CRS patterns for two antennas.

Fig. 9 is a table illustrating cell-ID assignment for crosstalk channel estimation.

Figs. 10-11 are block diagrams illustrating a network node in more detail, according to further possible embodiments.

Figs. 12-13 are block diagrams illustrating a radio head in more detail, according to further possible embodiments.

Detailed description

In a distributed base station system comprising a BBU, an IRU connected to the BBU and a plurality of RHs connected via dedicated cables to the IRU, there is a risk that crosstalk between nearby lying cables connecting different RHs to the IRU may have negative influence on the quality of signals sent over the cables. A decreased signal quality would reduce the cable reach and the usable bandwidth available, which are key performance aspects of such a system. For this reason, a solution is provided to reduce or mitigate the influence of crosstalk between nearby lying cables connecting an IRU with different RHs of such a base station system. An embodiment of the solution comprises detecting at a first RH, a received symbol sent from the IRU and sending back to the IRU an error sample (also called a slicing error) of the received symbol, i.e. how the symbol has been distorted from a "clean" symbol when received at the first RH from the IRU. The error sample is then used to set coefficients of a precoder, so that further symbols are properly precoded before being sent over the cable so that the symbols will be received as clean (or at least cleaner) symbols. This is achieved because the crosstalk is pre-canceled out by the precoder. Observe that the mentioned precoder is an additional precoder than the radio precoder used for multi-antenna processing in the BBU. The radio precoder is designed to take care of the radio signals transmitted at the different antennas. It cannot handle the crosstalk between nearby lying cables. Therefore, in the claimed system a separate precoder is added to cancel the crosstalk. This separate precoder may reside in the IRU. This approach is transparent to the radio process including the radio precoder. No change is needed in the BBU processing algorithms.

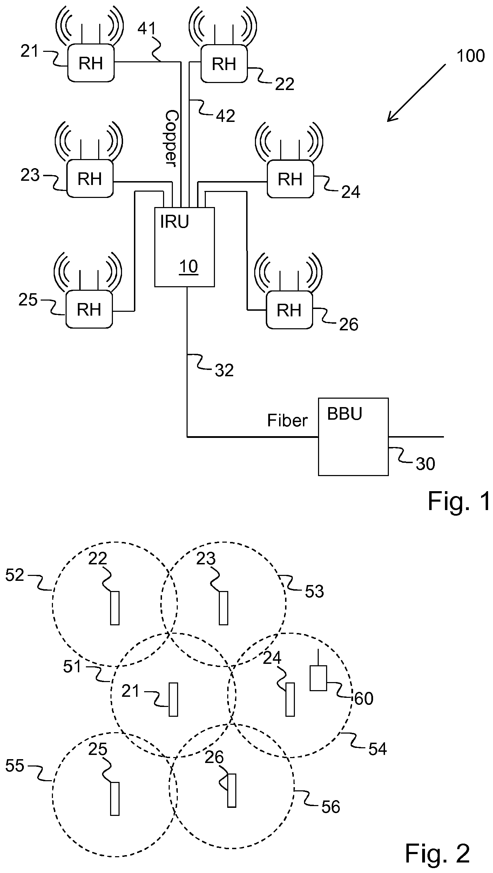

Fig. 1 shows an architecture of a base station system 100, also called a radio dot system, according to an embodiment of the invention. The base station system 100 comprises a BBU 30 which is arranged to treat signals in a baseband frequency region. The base station system 100 further comprises an IRU 10 connected to the BBU 30 via e.g. an optical fiber 32. Alternatively, for example when the IRU and the BBU are closely located, the connection between the RU and the BBU may be electrical via e.g. copper cables. The system 100 further comprises a number of RHs 21-26 connected to the IRU 10 via metallic conductors 41, 42. The metallic conductors may be twisted pair cables, e.g. copper cables such as Cat 3/5/6/7 cables. Each RH is connected with a dedicated metallic conductor back to the IRU. In the following we focus on telephone grade cables like Cat 3 cables. Such cables have multi-pairs (e.g. more than four) in a bundle and the pairs are gradually split out to different RHs, for example at different homes. This is a common scenario for a telephony network. In this case, there is always a common cable segment where the pairs for different RHs go through the same bundle and therefore suffer from the mutual crosstalk between them in the cable.

When transporting signals in the downlink direction, the BBU 30 generates and sends a number of baseband signals, e.g. base band LTE signals. Corresponding IQ data flows of the baseband signals are sent to the IRU, which IQ data flows are directed to different RHs 21-26 for further distribution to UEs in radio connection with one of the RHs 21-26. The number of downlink baseband signals may be sent as a single digital signal from the BBU to the IRU, over the optical fiber, e.g. encapsulated using a Common Public Radio Interface, CPRI, protocol. The IRU 10 then decapsulates the CPRI stream to baseband signals as IQ data flows per antenna carrier and upconverts the downlink baseband signals received from the baseband unit 30 to a low intermediate frequency, IF that is suitable for transmission on the metallic conductor. The IRU 10 then sends the DL IF radio signals to the RHs via the respective metallic conductor. By transmitting IF signals instead of high frequency RF signals over the metallic conductors, the cable loss is reduced. The RHs 21-26 are arranged for receiving the analog IF signals from its respective metallic conductor to which the RH is connected and for upconverting the IF signals to the actual radio frequency, RF, to be transmitted over the air from antenna(s) of the respective RH. A radio frequency region may be e.g. 400 MHz to 6 GHz. The RH comprises at least one antenna element for transmitting the DL signal to UEs.

In the uplink direction, the RHs 21-26 are each arranged to receive RF radio signals from UEs, e.g. mobile stations, down-convert the RF signals to IF signals to be transported over the metallic conductors towards the IRU 10 for further processing. The IRU is arranged to down-convert the received IF signal to a baseband frequency for further transmission to the BBU 30. Uplink and downlink IF signals may be transported over the metallic conductors 41, 42 via frequency duplexing for FDD radios, and/or time duplexing for TDD radios. An RDS is a cost-effective radio system, especially for indoor deployment.

Fig. 2 shows a schematic view of an example of how the RHs 21-26 of fig. 1 may be positioned to cover a geographical area. Each RH 21-26 covers a geographical area 51-56. A mobile station 60 that is situated in e.g. geographical area 54 will be connected to RH 24 and receive DL RF signals over the air from RH 24 and transmit UL RF signals over the air to RH 24. Even though fig. 2 shows circular geographical areas, so called Omni cells, any other type of geographical area may be covered, such as an angular section, a part of a building floor etc. The RHs may be arranged in a building, e.g. on different floors of the building.

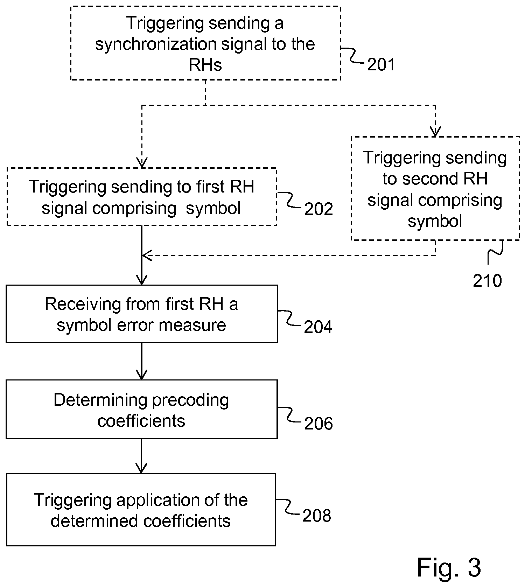

Fig. 3 (and fig. 1) describes a method for mitigating crosstalk, performed by a network node of a wireless communication network operable in a base station system 100 (see fig. 1) of the wireless communication network. The base station system comprises an IRU 10, a BBU 30 connected to the IRU, and a plurality of RHs 21-26 connected to the IRU via a plurality of metallic conductors. The method comprises receiving 204 from a first 21 of the plurality of RHs, a measure of an error of one or more symbols of a signal received by the first RH from the IRU over a first 41 of the plurality of metallic conductors, the measure of the error being detected by the first RH and the signal being destined to a UE 60 wirelessly connected to the first RH 21. The method further comprises determining 206 precoding coefficients for a precoder according to the received error measure, and triggering 208 application of the determined precoding coefficients when sending further signals to the first RH over the first of the plurality of metallic conductors, the further signals being destined to UEs wirelessly connected to the first RH.

The network node may be the IRU. The IRU handles the interface between the baseband signal and the metallic conductor. The IRU may transform the signal from the baseband frequency to the intermediate frequency. The IRU may apply the determined precoding coefficients on the precoder. Alternatively, the network node may be the BBU. The BBU is the node that handles signals in the baseband frequency. Alternatively, the network node may be situated somewhere else in the network, determining precoding coefficients and triggering to apply the determined precoding coefficients when sending further signals to the first RH. In case the method is performed in the BBU or in some other network node different from the IRU, the BBU (or other network node) triggers the application of the determined precoding coefficients. In case the precoder is situated in the IRU the BBU (or other network node) would trigger the IRU to apply the determined precoding coefficients. The term "triggering applying of the determined coefficients" may signify that the fact that new precoding coefficients are determined results in the new coefficients being used by the precoder for future or following sending of signals. The signal destined to a UE is a signal to be sent over a wireless interface in a wireless communication system towards a UE. The signal destined to a UE may be a signal according to the 3GPP Long Term Evolution, LTE, standard. The error represents a difference between a sent symbol and a received symbol. The error may be an error vector. The received measure of the one or more symbol error may either be the actual error (also called slicing error) or a measure of the received one or more symbol. In the former, the actual error is calculated by the IRU as a difference between the sent symbol and the measure of the received one or more symbol. For example, if the sent symbol is (+1, -j) and the received one or more symbol is (+0.8, -0.6j), the actual error would be (-0.2, +0.4j). The plurality of RHs is connected to the IRU via a respective metallic conductor. In other words, there may be a one to one relationship between the number of RHs and the number of metallic conductors. However, the invention is also applicable where an RH is connected to more than one metallic conductor, as long as each conductor is connected to carry a signal from distinct LTE antenna ports. Except for the mentioned precoder, which may be called a conductor precoder, there is normally also a precoder implemented in the BBU. The BBU precoder precodes the radio signal in a baseband format to preform multi-antenna processing, for example MIMO processing, which can increase bit rate and robustness by spatial multiplexing, diversity and/or interference cancellation. The conductor precoder on the other hand precodes the signal to mitigate metallic conductor interface crosstalk, or interference between pairs. The precoders are independent of each other.

By such a method it is possible to reduce cross-talk over neighboring metallic conductors in a base station system. As opposed to crosstalk in VDSL this method deals with crosstalk for signals that are to be sent over an air interface to the end users but before reaching the antenna they are sent over a metallic conductor for further transmission by the antenna over the air interface, and then it has been found that there may be crosstalk over the metallic conductor. VDSL on the other hand is a wireline technology that is adapted for wireline interfaces. If you try to deploy a base station over the same metallic conductors in a VDSL-like scenario, the crosstalk will degrade the performance figures of the transmitter. It may also cause inband interference on neighboring frequency carriers which is not allowed in 3GPP. In both cases you can only attempt to keep 3GPP compliance if you perform crosstalk cancellation.

With the error samples from one RH, it is possible to cancel out the crosstalk to this conductor from other conductors connected to the same IRU. In this case, for a linear precoder, the corresponding column vector of the precoding matrix will be updated. In order to completely determine the precoder to cancel out the mutual crosstalk between all conductors connected to the same IRU, the information of the whole channel matrix may be needed, which requires error samples from all conductors.

According to an embodiment, the one or more symbol is a data symbol.

According to another embodiment, the one or more symbol is a reference signal symbol, such as Cell-specific reference signal, CRS, symbol. The reference signal symbols are repetitively broadcasted by the RH irrespective of whether there are data to be sent or not. This means that in comparison to using the data symbols the reference signal symbols are always there to measure on. When using data symbols and there is no data to be sent over the metallic conductor, it may be necessary to send dummy symbols to the RH on which the RH can detect the measure of the error.

According to an embodiment, the method further comprises triggering sending 202, to the first of the plurality of RHs, the signal destined to the UE connected to the first of the plurality of RHs. In case the network node is the IRU, a unit such as a processor in the IRU triggers the sending, and the network node also performs the actual sending. In case the network node is another node, such as a BBU, the network node triggers the IRU to send the signal to the first RH.

According to another embodiment, the method further comprises triggering sending 210, to a second of the plurality of RHs, a signal destined to a UE connected to the second of the plurality of RHs. This signal sent to the second RH comprises a reference signal symbol. Further, the signal sent to the first RH and the signal sent to the second RH is sent in the same frequency and time slot. When CRS signal is used, the error samples can be calculated accurately without decoding errors since the CRS is predefined and known. When the CRS signals are sent simultaneously and over the same frequency over two conductors that experience mutual crosstalk, the mutual crosstalk components can be detected by error samples fed back from the RH side. So it is advantageous to align the CRS signals on different pairs to different cells in the frequency grid. To be able to achieve that for LTE signals, the CRS signals over two conductors to two different RHs are sent in the same frequency and time slot, cell-IDs are allocated to the first and the second RH separated by 6. The allocation of cell-IDs may be performed by the same node that performs this function in a regular LTE deployment, which is the e-Node B, more specifically the BBU of the e-NodeB. This node may be instructed to follow the sequence suggested by the present method.

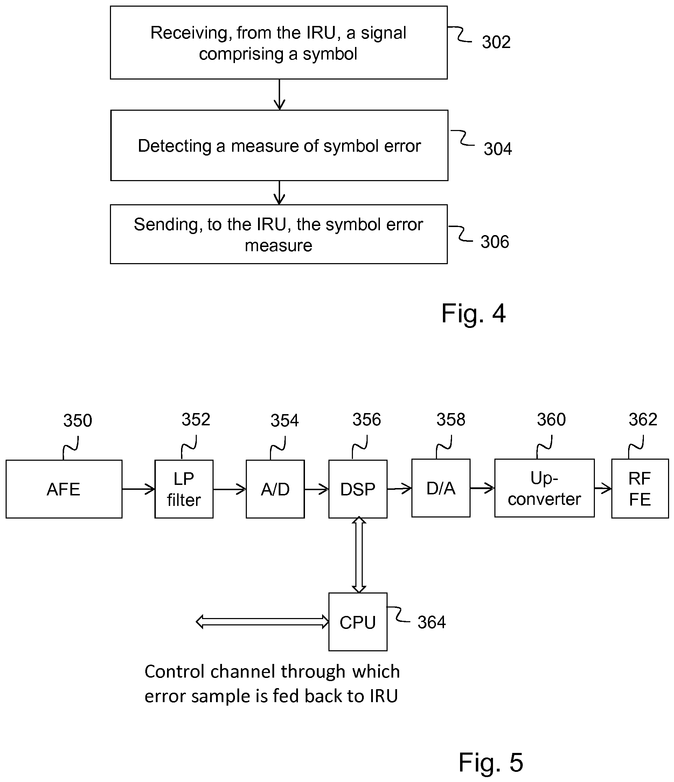

Fig. 4 shows a method performed by a first radio head, RH, 21 operable in a base station system 100 of a wireless communication network, for mitigating crosstalk. The base station system comprises an IRU 10, a BBU 30 connected to the IRU, and a plurality of RHs 21-26 including the first RH 21, the plurality of RHs being connected to the IRU via a plurality of metallic conductors. The method comprises receiving 302, from the IRU over a first 41 of the plurality of metallic conductors, a signal destined to a UE 60, wirelessly connected to the first RH, the signal comprising one or more symbols. The method further comprises detecting 304, from the received one or more symbol, a measure of an error of the one or more symbol and sending 306, to the IRU, the measure of the one or more symbol error, for further determining of precoding coefficients for a precoder based on the received measure of symbol error.

According to an embodiment, the one or more symbol is a data symbol. According to another embodiment, the one or more symbol is a reference signal symbol, such as Cell-specific reference signal, CRS, symbol.

Fig. 5 shows an RH according to an embodiment. The RH (also called *dot*) receives the IF signal from the metallic conductor to which it is connected via an Analog Front End 350 connected to the metallic conductor. The received IF signal is low-pass, LP, filtered in an LP filter 352 connected to the AFE, thereafter analog to digital, A/D converted in an A/D 354 connected to the LP filter, after which the signal is digitally processed in a digital signal processor, DSP, 356. Then the signal is digital to analog converted back to analog signal in a D/A 358 connected to the DSP, and then upconverted by an Upconverter 360 to the required RF signal, which is sent to an RF frontend 362 for transmission over the air interface to UEs.

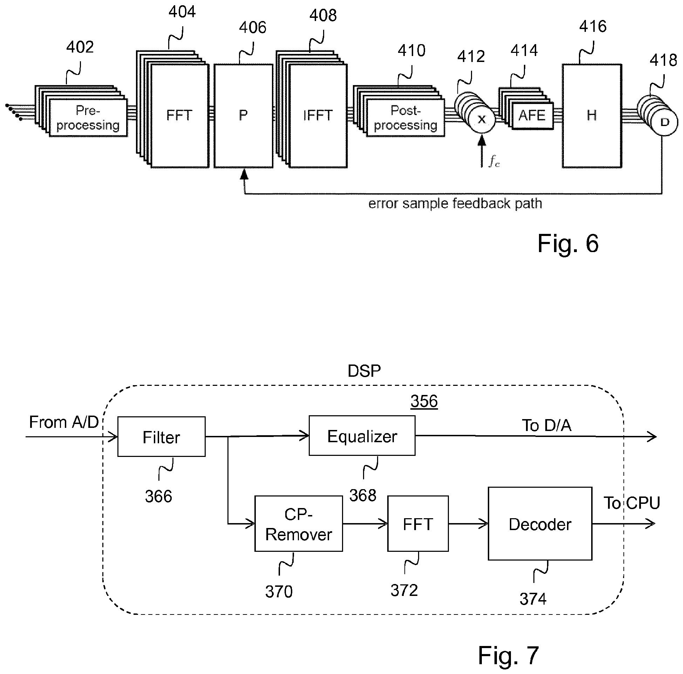

According to an embodiment, an estimate of the complex metallic conductor channel gains, i.e. the crosstalk channel coefficients, are available at the IRU calculated from feedback of error samples detected by the RH on signals received from the IRU. A possible embodiment to realize this is based on executing additional digital signal processing in the IRU as is described in the following. A frequency-domain crosstalk cancellation scheme can be implemented as shown in fig. 6 in which boxes 402-414 symbolized functions in the IRU, box 416 symbolizes the metallic conductor channel gain and box 418 the RH.

The input to a pre-processing unit 402 of the IRU for crosstalk cancellation is a set of N IQ flows received from the BBU, which IQ flows contain the IQ samples per antenna-carrier. In the figure, the number of stacked blocks for each unit (or function) may equal the number of IQ flows and the stacked blocks symbolize separate treatment of each IQ flow. In other words, when the IQ flows reaches the pre-processing unit 402, the CPRI stream has already been decapsulated into the individual streams. After receiving the IQ flows, the pre-processing unit 402 first removes the cyclic prefix for each OFDM symbol. The remaining samples are then converted from serial to parallel and used as inputs to a Fast Fourier Transform, FFT, unit 404 that performs an FFT on the symbols. In the FFT unit, the symbols are transferred to frequency domain, in which each subcarrier is modulated by Quadrature Amplitude modulation, QAM. For every subcarrier, the $k^{th}$ element (i.e. the kth subcarrier) of the N FFT outputs is stacked into a vector and used as input to a precoder 406.

Next, a precoding operation is performed in the precoder 406, on the input vectors (i.e. QAM symbols) on each subcarrier. The precoder here pre-cancels the crosstalk between pairs. There are mainly two types of precoding techniques, linear precoding and non-linear precoding techniques, respectively. To have an example here, given the knowledge of the crosstalk channel coefficients H, a linear precoder can be simply inverse of the crosstalk channel coefficients scaled by the direct channel coefficients, $P = H^{-1}H_d$, where $H_d$ is the diagonal matrix of H. P is the precoding matrix (or precoding coefficients). In this case, the received signals at the RH side is $y = HPx + n$ where y is the received signal vector comprising the received signals from different RHs, x is the transmitted signal vector comprising the transmitted signals to different RHs, P is the precoding matrix, H is a channel matrix comprising direct channel coefficients as the diagonal elements and crosstalk channel coefficients as the off-diagonal elements, and n is the background noise vector on different pairs. Take $P = H^{-1}H_d$, then the received signal vector is $y = H_dx+n$. As $H_d$ is a diagonal matrix, no crosstalk components are remained in y. So the crosstalk is pre-cancelled. The method works for both types of the precoding schemes, as the method favors channel estimation.

The precoded symbols are then transformed back to time domain by an Inverse FFT, IFFT, unit 408. Thereafter, in a post-processing unit 410, the cyclic prefix is added to the precoded OFDM symbols. After adding a cyclic prefix, the OFDM signals are upconverted in an upconverter 412 (also called mixer) to an IF frequency $f_c$ that is suitable for transmission over the metallic conductors. The upconverted samples are then digital-to-analog converted and sent through an analog front end 414 to be further transmitted on the metallic conductors 416 to be received at the individual RHs 418. The RHs 418 then receives the upconverted analog OFDM signals and calculates error samples of the precoded symbols and sends the error samples back to the precoder 406 of the IRU, as will now be described further.

In the following it is assumed that the IRU and the RHs are synchronized on clock-level, symbol-level and also subframe-level. The clock synchronization may be done by a dedicated synchronization channel between the IRU and the RHs. The symbol and subframe synchronization may be done by for example an LTE UE receiver functionality implemented in the IRU and in the RHs. Clock synchronization is needed for up/down conversion. Symbol synchronization is for encoding/decoding OFDM symbols. Subframe synchronization is to identify reference signals, which are embedded in specific subframes.

Each RH 418 calculates the slicing error or error samples of a selected type of symbol of the received OFDM signal, e.g. of specific reference symbols or of data symbols, and then sends the error samples back to the IRU. Fig. 7 shows an example of a DSP 356 (see fig. 5 also) in an RH, adapted for error sample calculation and feedback. The DSP 356 comprises a filter 366 to filter out unwanted signals and an equalizer 368 to equalize the slope of the line attenuation. The selected symbols are extracted after passing the filter 366. After removing the cyclic prefix in the Cyclic prefix remover 370 and transforming the digital signal to the frequency domain in an FFT 372, the error samples are calculated in a decoder 374 and fed to the CPU 364 (fig. 5). The decoder decodes the received OFMD symbols used for precoder update. The decoder has a frequency-domain equalizer to recover the received symbol back to the original constellation plane, in order to decode the symbol and calculate the error samples. As one implementation example, this equalizer can be trained and updated using CRS signals. The CPU then feeds the error samples back through the control channel from the RH to the IRU. The feedback process may be done upon the requests from the IRU.

The IRU then calculates the precoder coefficients according to the received error samples. Two exemplary methods for calculating precoding coefficients based on CRS symbols and data symbols, respectively, are presented below.

The data symbol based method uses the feedback of error samples detected by the RH from data symbols. Statistical processing methods like Minimum mean square error, MMSE, based, Least Square, LS, based and Least Mean Square, LMS, based methods etc. for precoder update can be driven by the error samples to minimize the errors and therefore cancel out the crosstalk. In the following example, an LS-based method is described, to estimate the crosstalk channel matrix based on the error samples from the RHs. After the channel is estimated, one can update the precoder following a linear or non-linear precoding approach.

The formulation described below assumes a single subcarrier case, without loss of generality for multi-carrier cases. It is assumed that transmitted and received symbols for all lines are known at the transmitter. This is possible, for example, after the received symbols are fed back via the control channel.

Consider a Distributed Antenna System carrying downlink LTE over twisted pairs, where M independent cells are synchronized. Let $x_k \in \mathbb{C}^{M \times 1}$ represent the transmitted symbol vector at time slot $k$. The received symbol vector $y_k \in \mathbb{C}^{M \times 1}$ can then be described as

$$y_k = H x_k + n_k, \qquad\qquad (1.1)$$

where $H \in \mathbb{C}^{M \times M}$ is the frequency-domain channel matrix and $n_k \in \mathbb{C}^{M \times 1}$ is the additive noise vector. Let $W$ represent the number of symbols in an observation window. Define

$$\gamma = \begin{bmatrix} y_k \\ y_{k-1} \\ \vdots \\ y_{k-W+1} \end{bmatrix} \in \mathbb{C}^{WM \times 1}, \eta = \begin{bmatrix} n_k \\ n_{k-1} \\ \vdots \\ n_{k-W+1} \end{bmatrix} \in \mathbb{C}^{WM \times 1}, X = \begin{bmatrix} x_k^T \otimes I_M \\ x_{k-1}^T \otimes I_M \\ \vdots \\ x_{k-W+1}^T \otimes I_M \end{bmatrix} \in \mathbb{C}^{WM \times M^2},$$

and let $h \in \mathbb{C}^{M^2 \times 1}$ be a vector obtained by stacking the columns of $H$. The last $W$ received symbols can then be described as

$$y = Xh + \eta. \qquad (1.2)$$

Following a least-square method, taking advantage of Eq. (1.2), one can obtain an LS estimate of $h$, for example, by using a pseudo-inverse

$$\bar{h} = (X^H X)^{-1} X^H y. \qquad (1.3)$$

Therefore, by stacking the elements of $\bar{h}$ column-wise back, one obtains the desired channel matrix estimate $\bar{H}$. With the known transmitted symbols and the corresponding error samples, one can obtain y in equation 1.2 and further estimate the channel coefficients by equation 1.3.

If data symbols are used, the above described exemplary method requires that the data symbols are not corrupted by the crosstalk, such that the symbol can be correctly decoded and the error samples can be calculated correctly. Therefore it may be needed to control the number of RHs to which signals are sent simultaneously from the IRU. If too many RHs receive signals simultaneously, the crosstalk may be so high resulting in that the signal gets degraded so much that the data symbol may get corrupted. Also, when there is no data in the buffer to transmit, dummy data symbols need to be transmitted to be able to have something to calculate error samples upon. The randomness of the dummy data symbols on each antenna should preferably be statistically independent, for example, based on different pseudo-random sequences.

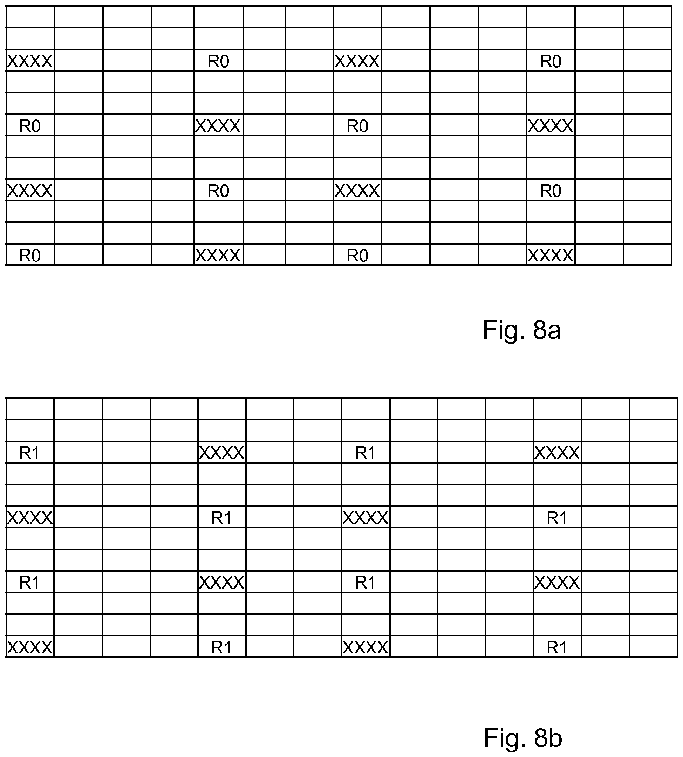

The reference signal based method uses the feedback of the error samples of the CRS symbols. The advantage of this method is that the CRS is always broadcasted (periodically). In other words, no dummy symbols have to be sent as when using data symbols and there is no data to be sent. The CRS is a two dimensional cell specific sequence in LTE to aid UEs in performing channel estimation and cell identification of a cell and is the basis for the cell selection and hand-over decisions. The CRS spans each resource block and is sent at predefined resource elements. An example of CRS pattern for two different antenna ports of one RH, which has two pairs, each transport the signal of one antenna port, are shown in Fig. 8a and 8b, respectively. Each square in the pattern represents a resource element. R0 represents a resource element on which a CRS is sent from the first antenna port. R1 represents a resource element on which a CRS is sent from the second antenna. "XXXX" signifies that no reference symbol is sent in the information element for this antenna port. The CRS signals are transmitted in each resource block in every downlink subframe in the frequency domain and are covering the whole cell bandwidth. The CRS for different cells can use the same resource elements and can also be shifted in resource elements.

When to send an LTE CRS depends on its cell-id, which is a numeric identifier that defines 504 unique cells. The cell-id defines not only the reference signal constellation points by associated M-sequences, but also their allocation within the resource grid (figs. 8a, 8b). The period of the CRS sequence is one radio frame, e.g. 10ms. Cells with consecutive ids have their reference signal frequency allocation shifted by one. If two cells have ids separated by 6, i.e. 0, 6, 12, ..., their reference signals are allocated in the same positions in the downlink resource grid. In order to see the mutual crosstalk components on the received CRS symbols, the CRS for different cells should use the same frequency/time pattern, so that the error samples per RH comprise all crosstalk components from other RHs connected to the same IRU. To achieve this, this invention proposes to assign the cell-ids for different cells whose RHs are connected to the same IRU according to:

$$ID_1 \in \{0, 1, ..., 503\}$$

$$ID_i = ID_{i-1} + 6 \mod 504, i \in \{2, 3, ..., M\}$$

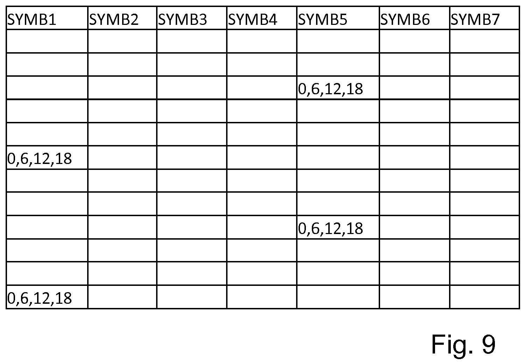

This guarantees that the CRS symbols are transmitted synchronously in time and frequency, as shown in fig. 9. In this example, four cells whose RHs are connected to the same IRU are assigned cell id 0, 6, 12 and 18, respectively, which results in that the CRS symbols are transmitted on the same resource element in each resource block for the four cells (12 REs in 7 OFDM symbols), as illustrated by the cell-ID numbers "0, 6, 12, 18".residing in the same resource element square.

In this way, the error samples on the received CRS symbols of each RH comprises the crosstalk components from the other RHs' CRS symbols transmitted on closely lying conductors. Treating the CRS as independent random symbols, the error samples can be used to drive statistical processing methods like the MMSE-based, the LS-based and the LMS-based methods etc. mentioned before to update the precoder to cancel out the crosstalk. The same methods can be used as in the data symbol based method. Particularly, the LS method described above in detail is presented for crosstalk channel estimation with the known transmitted CRS symbols and the received CRS symbols (i.e. error samples plus the transmitted CRS symbols) from the feedback. Furthermore, CRS may be generated based on a Gold sequence, which is a class of pseudo random sequences having good periodic cross-correlation properties. If the cross-correlation property is utilized by more advanced methods, an even better performance may be achieved.

In this way, the precoding coefficients on every $3^{rd}$ subcarrier is explicitly calculated, because the CRS is defined on every $3^{rd}$ subcarrier (1, 4, 7...), as shown in fig. 9 (every row of squares defines a subcarrier). The precoding coefficients on the rest of the subcarriers can be obtained by interpolation techniques. It can even simply use the same precoding coefficients, as the 3 subcarriers are within the coherent bandwidth for the cable channel.

It is noted that the proposed CRS-based method works also for multiple antennas per RH, because of the shifted structure of CRS per antenna port defined in 3GPP, as shown in Fig. 8a and 8b.

The described solution significantly lowers crosstalk of a base station system where the IRU is connected to its RHs via metallic conductors between which crosstalk may occur. This result is a significant improvement of reach and bandwidth for signals sent from an RH to UEs in connections with the RH. Since the crosstalk cancellation is done in the IRU, no modifications are needed on today's BBU. Further, the described solution reuses existing radio signaling, e.g. LTE signaling, for updating the precoder for downlink crosstalk cancellation, which means that no extra signaling is needed on the metallic conductors.

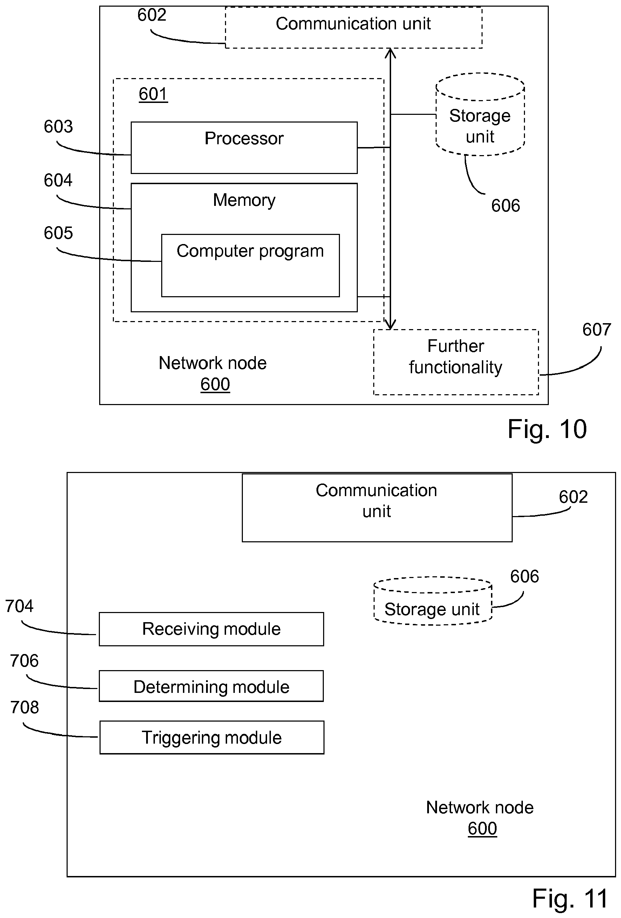

Fig. 10 describes an embodiment of a network node 600 operable in a wireless communication network, configured to mitigating crosstalk of a base station system 100. The dashed lines in the figures are used to illustrate that those boxes are only optional. The base station system comprises an IRU 10, a BBU 30 connected to the IRU, and a plurality of RHs 21-26 connected to the IRU via a plurality of metallic conductors. The network node 600 comprises a processor 603 and a memory 604. The memory contains instructions executable by said processor, whereby the network node 600 is operative for receiving from a first 21 of the plurality of RHs, a measure of an error of one or more symbols of a signal received by the first RH from the IRU over a first of the plurality of metallic conductors, the measure of the error being detected by the first RH, the signal being destined to a user equipment, UE 60 wirelessly connected to the first RH 21. The memory further contains instructions executable by said processor, whereby the network node 600 is operative for determining precoding coefficients for a precoder according to the received error measure, and triggering applying the determined precoding coefficients when sending further signals to the first RH over the first of the plurality of metallic conductors, the further signals being destined to UEs wirelessly connected to the first RH.

According to an embodiment, the one or more symbol is a data symbol. According to another embodiment, the one or more symbol is a reference signal symbol, such as Cell-specific reference signal, CRS, symbol.

According to another embodiment, the memory contains instructions executable by said processor, whereby the network node 600 is operative for triggering sending, to the first of the plurality of RHs, the signal destined to the UE connected to the first of the plurality of RHs.

According to another embodiment, the memory contains instructions executable by said processor, whereby the network node 600 is operative for triggering sending, to a second of the plurality of RHs, a signal destined to a UE connected to the second of the plurality of RHs, the signal sent to the second RH comprising a reference signal symbol, wherein the signal sent to the first RH and the signal sent to the second RH are sent in the same frequency and time slot.

The network node 600 may further comprise a communication unit 602, which may be considered to comprise conventional means for wirelessly communicating from and/or to other nodes in the communication network, such as the BBU 30, the UE 60 and the IRU, depending on where the functionality is installed. The communication unit may comprise one or more communication ports for communicating with other nodes in the network. The network node may further comprise one or more storage units 606 and further functionality 607 useful for the network node to serve its purpose as network node. The instructions executable by said processor may be arranged as a computer program 605 stored in said memory 604. The processor 603 and the memory 604 may be arranged in an arrangement 601. The arrangement 601 may be a micro processor and adequate software and storage therefore, a Programmable Logic Device, PLD, or other electronic component(s)/processing circuit(s) configured to perform the actions, or methods mentioned above.

The computer program 605 may comprise computer readable code means, which when run in the network node 600 causes the network node to perform the steps described in any of the described embodiments. The computer program may be carried by a computer program product connectable to the processor. The computer program product may be the memory 604. The memory 604 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 604. Alternatively, the computer program may be stored on a server or any other entity connected to the communication network to which the network node has access via its communication unit 602. The computer program may then be downloaded from the server into the memory 604.

Fig. 11 describes another embodiment of a network node 600 of a wireless communication network operable in a base station system 100 of the wireless communication network. The base station system comprises an IRU 10, a BBU 30 connected to the IRU and a plurality of RHs 21-26 connected to the IRU via a plurality of metallic conductors. The network node comprises a receiving module 704 for receiving from a first 21 of the plurality of RHs, a measure of an error of one or more symbols of a signal received by the first RH from the IRU over a first of the plurality of metallic conductors, the measure of the error being detected by the first RH, the signal being destined to a UE 60 wirelessly connected to the first RH 21. The network node further comprises a determining module 706 for determining precoding coefficients for a precoder according to the received error measure, and a triggering module 708 for triggering applying the determined precoding coefficients when sending further signals to the first RH over the first of the plurality of metallic conductors, the further signals being destined to UEs wirelessly connected to the first RH.

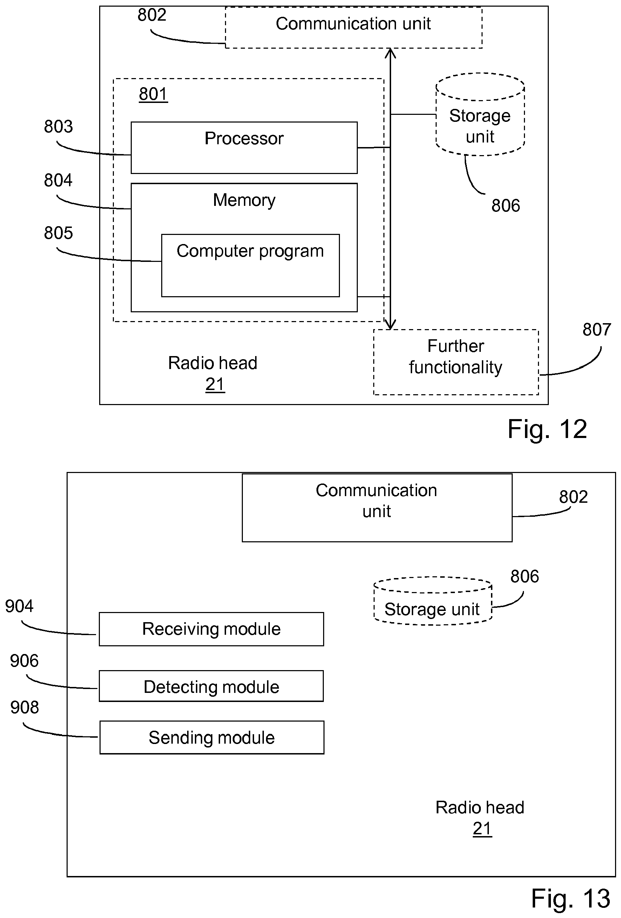

Fig. 12 describes an embodiment of a first radio head, RH, 21 operable in a base station system 100 of a wireless communication network, configured to contribute in mitigating crosstalk. The base station system comprises an IRU 10, a BBU 30 connected to the IRU, and a plurality of RHs 21-26 including the first RH, the plurality of RHs being connected to the IRU via a plurality of metallic conductors. The first RH comprises a processor 803 and a memory 804. The memory contains instructions executable by said processor, whereby the first RH 21 is operative for receiving, from the IRU over a first 41 of the plurality of metallic conductors, a signal destined to a UE 60 wirelessly connected to the first RH, the signal comprising one or more symbols. The memory further contains instructions executable by said processor, whereby the first RH 21 is operative for detecting, from the received one or more symbol, a measure of an error of the one or more symbol; and sending, to the IRU, the measure of the one or more symbol error, for further updating of precoding coefficients for a precoder based on the received measure of symbol error.

According to an embodiment, the one or more symbol is a data symbol. According to another embodiment, the one or more symbol is a reference signal symbol, such as Cell-specific reference signal, CRS, symbol.

The radio head 21 may further comprise a communication unit 802, which may be considered to comprise conventional means for wirelessly communicating from and/or to the UE 60 and the IRU 10. The communication unit may comprise a wireless transceiver and at least one antenna. The communication unit may comprise one or more communication ports for communicating with the IRU over the metallic conductor. The radio head may further comprise one or more storage units 806 and further functionality 807 useful for the radio head to serve its purpose as radio head. The instructions executable by said processor may be arranged as a computer program 805 stored in said memory 804. The processor 803 and the memory 804 may be arranged in an arrangement 801. The arrangement 801 may be a micro processor and adequate software and storage therefore, a Programmable Logic Device, PLD, or other electronic component(s)/processing circuit(s) configured to perform the actions, or methods mentioned above.

The computer program 805 may comprise computer readable code means, which when run in the radio head 21 causes the radio head to perform the steps described in any of the described embodiments. The computer program may be carried by a computer program product connectable to the processor. The computer program product may be the memory 804. The memory 804 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 804. Alternatively, the computer program may be stored on a server or any other entity connected to the communication network to which the radio head 21 has access via its communication unit 802. The computer program may then be downloaded from the server into the memory 804.

Fig. 13 describes another embodiment of a first radio head 21 operable in a base station system 100 of a wireless communication network, configured to contribute in mitigating crosstalk. The base station system comprises an IRU 10, a BBU 30 connected to the IRU, and a plurality of RHs 21-26 including the first RH, the plurality of RHs being connected to the IRU via a plurality of metallic conductors. The first RH comprises a receiving module 904 for receiving, from the IRU over a first 41 of the plurality of metallic conductors, a signal destined to a UE 60 wirelessly connected to the first RH, the signal comprising one or more symbols. The first RH further comprises a detecting module 906 for detecting, from the received one or more symbol, a measure of an error of the one or more symbol, and a sending module 908 for sending, to the IRU, the measure of the one or more symbol error, for further updating of precoding coefficients for a precoder based on the received measure of symbol error.

In figs. 12 and 13 the term "first radio head" is used for being able to distinguish the first RH out of the plurality of RHs mentioned in the text to the figures. However, any of the plurality RHs could be the first RH.

**Claims**

1. A method for mitigating crosstalk performed by a network node of a wireless communication network operable in a base station system (100) of the wireless communication network, the base station system comprising an intermediate radio unit, IRU (10), a baseband unit, BBU (30), connected to the IRU and a plurality of radio heads, RHs, (21-26) connected to the IRU via a plurality of metallic conductors, the method comprising:

   receiving (204) from a first (21) of the plurality of RHs, a measure of an error of one or more symbols of a signal received by the first RH from the IRU over a first of the plurality of metallic conductors, the measure of the error being detected by the first RH, the signal being destined to a user equipment, UE (60), wirelessly connected to the first RH (21),
   determining (206) precoding coefficients for a precoder according to the received error measure, and
   triggering applying (208) the determined precoding coefficients when sending further signals to the first RH over the first of the plurality of metallic conductors, the further signals being destined to UEs wirelessly connected to the first RH, and
   triggering sending (202), to the first of the plurality of RHs, the signal destined to the UE connected to the first of the plurality of RHs, and
   triggering sending (210), to a second of the plurality of RHs, a signal destined to a UE connected to the second of the plurality of RHs, the signal sent to the second RH comprising a reference signal symbol, wherein the signal sent to the first RH and the signal sent to the second RH are sent in the same frequency and time slot.

2. Method according to claim 1, wherein the one or more symbol is a data symbol.

3. Method according to claim 1, wherein the one or more symbol is a reference signal symbol.

4. Method according to claim 3, wherein the reference signal symbol is a Cell-specific reference signal, CRS, symbol.

5. A method performed by a first radio head, RH, (21) operable in a base station system (100) of a wireless communication network, for mitigating crosstalk, the base station system comprising an intermediate radio unit, IRU, (10) a baseband unit, BBU, (30) connected to the IRU, and a plurality of RHs (21-26) including the first RH (21), the plurality of RHs being connected to the IRU via a plurality of metallic conductors, the method comprising:

   receiving (302), from the IRU over a first (41) of the plurality of metallic conductors, a signal destined to a user equipment, UE, (60) wirelessly connected to the first RH, the signal comprising one or more symbols;
   detecting (304), from the received one or more symbol, a measure of an error of the one or more symbol;
   sending (306), to the IRU, the measure of the one or more symbol error, for further updating of precoding coefficients for a pre-coder of the IRU based on the received measure of symbol error
   wherein the one or more symbol is a reference signal symbol sent to the first RH in the same frequency and time slot as signals sent to a second RH.

6. Method according to claim 5, wherein the reference signal symbol is a Cell-specific reference signal, CRS, symbol.

7. A network node (600) operable in a wireless communication network, configured to mitigating crosstalk of a base station system (100), the base station system comprising an IRU (10), a BBU (30) connected to the IRU, and a plurality of RHs (21-26) connected to the IRU via a plurality of metallic conductors, the network node (600) comprising a processor (603) and a memory (604), said memory containing instructions executable by said processor, whereby the network node (600) is operative for:

   receiving from a first (21) of the plurality of RHs, a measure of an error of one or more symbols of a signal received by the first RH from the IRU over a first of the plurality of metallic conductors, the measure of the error being detected by the first RH, the signal being destined to a user equipment, UE (60), wirelessly connected to the first RH (21),
   determining precoding coefficients for a precoder according to the received error measure, and
   triggering applying the determined precoding coefficients when sending further signals to the first RH over the first of the plurality of metallic conductors, the further signals being destined to UEs wirelessly connected to the first RH, and
   triggering sending, to the first of the plurality of RHs, the signal destined to the UE connected to the first of the plurality of RHs, and

triggering sending, to a second of the plurality of RHs, a signal destined to a UE connected to the second of the plurality of RHs, the signal sent to the second RH comprising a reference signal symbol, wherein the signal sent to the first RH and the signal sent to the second RH are sent in the same frequency and time slot.

8. Network node according to claim 7, wherein the one or more symbol is a data symbol.

9. Network node according to claim 7, wherein the one or more symbol is a reference signal symbol.

10. Network node according to claim 9, wherein the reference signal symbol is a Cell-specific reference signal, CRS, symbol.

11. A first radio head, RH, (21) operable in a base station system (100) of a wireless communication network, configured to contribute in mitigating crosstalk, the base station system comprising an IRU (10), a BBU (30) connected to the IRU, and a plurality of RHs (21-26) including the first RH, the plurality of RHs being connected to the IRU via a plurality of metallic conductors, the first RH comprising a processor (803) and a memory (804), said memory containing instructions executable by said processor, the first RH (21) is operative for:

receiving, from the IRU over a first (41) of the plurality of metallic conductors, a signal destined to a user equipment, UE, (60) wirelessly connected to the first RH, the signal comprising one or more symbols;
detecting, from the received one or more symbol, a measure of an error of the one or more symbol; and
sending, to the IRU, the measure of the one or more symbol error, for further updating of precoding coefficients for a precoder of the IRU based on the received measure of symbol error
wherein the one or more symbol is a reference signal symbol sent to the first RH in the same frequency and time slot as signals sent to a second RH.

12. A computer program (605) comprising computer readable code means to be run in a network node (600) of a wireless communication network, configured to mitigating crosstalk of a base station system (100), the base station system comprising an IRU (10), a BBU (30) connected to the IRU, and a plurality of RHs (21-26) connected to the IRU via a plurality of metallic conductors, which computer readable code means when run in the network node causes the network node (600) to perform the method as defined in any of claims 1-4.:

13. A carrier containing the computer program (605) according to claim 12, wherein the carrier is one of an electronic signal, optical signal, radio signal or computer readable storage medium.

14. A computer program (805) comprising computer readable code means to be run in a first radio head, RH, (21) operable in a base station system (100) of a wireless communication network, the base station system comprising an IRU (10), a BBU (30) connected to the IRU, and a plurality of RHs (21-26) including the first RH, the plurality of RHs being connected to the IRU via a plurality of metallic conductors, which computer readable code means when run in the first RH causes the first RH (21) to perform the method as defined in any of claims 5-6.

15. A carrier containing the computer program (805) according to claim 14, wherein the carrier is one of an electronic signal, optical signal, radio signal or computer readable storage medium.

**Patentansprüche**

1. Verfahren zum Abmildern des Nebensprechens, das durch einen Netzknoten eines drahtlosen Kommunikationsnetzes durchgeführt wird, das in einem Basisstationssystem (100) des drahtlosen Kommunikationsnetzes betreibbar ist, wobei das Basisstationssystem eine mittlere Funkeinheit, IRU (10), eine Basisbandeinheit, BBU (30), die mit der IRU verbunden ist, und eine Vielzahl von mit der IRU über eine Vielzahl metallischer Leiter verbundenen Funkköpfen, RH, (21-26) aufweist, wobei das Verfahren Folgendes umfasst:

Empfangen (204), ausgehend von einem ersten (21) der Vielzahl von RH, einer Fehlermessung eines oder mehrerer Symbole eines von einem ersten RH von der IRU über einen ersten der Vielzahl von metallischen Leitern empfangenen Signals, wobei das Signal für eine Benutzereinrichtung UE (60) bestimmt ist, das drahtlos mit dem ersten RH (21) verbunden ist,
Bestimmen (206) von Vorcodierungskoeffizienten für einen Vorcodierer gemäß der empfangenen Fehlermessung, und

Auslösen der Anwendung (208) der bestimmten Vorcodierungskoeffizienten beim Senden weiterer Signale an den ersten RH über den ersten der Vielzahl von metallischen Leitern, wobei die weiteren Signale für UE bestimmt sind, die drahtlos mit dem ersten RH verbunden sind, und

Auslösen des Sendens (202) des Signals, das für die mit dem ersten der Vielzahl von RH verbundenen UE bestimmt ist, an den ersten der Vielzahl von RH, und

Auslösen des Sendens (210) eines Signals an einen zweiten der Vielzahl von RH, das für eine UE bestimmt ist, die mit dem zweiten der Vielzahl von RH verbunden ist, wobei das an den zweiten RH gesendete Signal ein Referenzsignalsymbol umfasst, wobei das an den ersten RH gesendete Signal und das an den zweiten RH gesendete Signal in der gleichen Frequenz und dem gleichen Zeitfenster gesendet werden.

2. Verfahren nach Anspruch 1, wobei das eine oder die mehreren Symbole ein Datensymbol sind.

3. Verfahren nach Anspruch 1, wobei das eine oder die mehreren Symbole ein Referenzsignalsymbol sind.

4. Verfahren nach Anspruch 3, wobei das Referenzsignalsymbol ein zellspezifisches Referenzsignalsymbol, CRS, ist.

5. Verfahren, das durch einen ersten Funkkopf, RH, (21), der in einem Basisstationssystem (100) eines drahtlosen Kommunikationsnetzes betreibbar ist, zum Abmildern des Nebensprechens durchgeführt wird, wobei das Basisstationssystem eine mittlere Funkeinheit, IRU (10), eine Basisbandeinheit, BBU (30), die mit der IRU verbunden ist, und eine Vielzahl von RH (21-26) einschließlich des ersten RH (21) umfasst, wobei die Vielzahl von RH mit dem IRU über eine Vielzahl metallischer Leiter verbunden ist, wobei das Verfahren Folgendes umfasst:

Empfangen (302) eines für eine Benutzereinrichtung, UE, (60), die drahtlos mit dem ersten RH verbunden ist, bestimmten Signals ausgehend von der IRU über einen ersten (41) der Vielzahl von metallischen Leitern, wobei das Signal ein oder mehrere Symbole umfasst;

Erkennen (304), aus dem empfangenen einen oder den empfangenen mehreren Symbolen, einer Fehlermessung des einen oder der mehreren Symbole;

Senden (306) der Messung des einen oder der mehreren Symbolfehler an die IRU zur weiteren Aktualisierung von Vorcodierungskoeffizienten für einen Vorcodierer der IRU basierend auf der empfangenen Messung des Symbolfehlers,

wobei das eine oder die mehreren Symbole ein Referenzsignalsymbol sind, das an den ersten RH auf der gleichen Frequenz und im gleichen Zeitfenster wie die an einen zweiten RH gesendeten Signale gesendet wird.

6. Verfahren nach Anspruch 5, wobei das Referenzsignalsymbol ein zellspezifisches Referenzsignalsymbol, CRS, ist.

7. Netzknoten (600), betreibbar in einem drahtlosen Kommunikationsnetz, das konfiguriert ist zum Abmildern des Nebensprechens eines Basisstationssystems (100), wobei das Basisstationssystem eine IRU (10), eine mit der IRU verbundene BBU (30) und eine Vielzahl von Funkköpfen (21-26), die mit der IRU über eine Vielzahl von metallischen Leitern verbunden ist, umfasst, wobei der Netzknoten (600) einen Prozessor (603) und einen Speicher (604) umfasst, wobei der Speicher vom Prozessor ausführbare Anweisungen enthält, wobei der Netzknoten (600) betreibbar ist zum:

Empfangen, ausgehend von einem ersten (21) der Vielzahl von RH, einer Fehlermessung eines oder mehrerer Symbole eines vom ersten RH ausgehend von der IRU über einen ersten der Vielzahl von metallischen Leitern empfangenen Signals, wobei die Fehlermessung vom ersten RH erkannt wird, wobei das Signal für eine drahtlos mit dem ersten RH (21) verbundene Benutzereinrichtung UE (60) bestimmt ist,

Bestimmen von Vorcodierungskoeffizienten für einen Vorcodierer gemäß der empfangenen Fehlermessung, und

Auslösen der Anwendung der bestimmten Vorcodierungskoeffizienten beim Senden weiterer Signale an den ersten RH über den ersten der Vielzahl von metallischen Leitern, wobei die weiteren Signale für UE bestimmt sind, die drahtlos mit dem ersten RH verbunden sind, und

Auslösen des Sendens des Signals, das für die mit dem ersten der Vielzahl von RH verbundene UE bestimmt ist, an den ersten der Vielzahl von RH, und

Auslösen des Sendens eines Signals an einen zweiten der Vielzahl von RH, das für eine UE bestimmt ist, die mit dem zweiten der Vielzahl von RH verbunden ist, wobei das an den zweiten RH gesendete Signal ein Referenzsignalsymbol umfasst, wobei das an den ersten RH gesendete Signal und das an den zweiten RH gesendete Signal auf der gleichen Frequenz und im gleichen Zeitfenster gesendet werden.

8. Netzknoten nach Anspruch 7, wobei das eine oder die mehreren Symbole ein Datensymbol sind.

**9.** Netzknoten nach Anspruch 7, wobei das eine oder die mehreren Symbole ein Referenzsignalsymbol sind.

**10.** Netzknoten nach Anspruch 9, wobei das Referenzsignalsymbol ein zellspezifisches Referenzsignalsymbol, CRS, ist.

**11.** Erster Funkkopf, RH, (21), betreibbar in einem Basisstationssystem (100) eines drahtlosen Kommunikationsnetzes, das so konfiguriert ist, das es zum Abmildern des Nebensprechens beiträgt, wobei das Basisstationssystem eine IRU (10), eine mit der IRU verbundene BBU (30) und eine Vielzahl von RH (21-26), einschließlich des ersten RH, umfasst, wobei die Vielzahl von RH mit der IRU über eine Vielzahl metallischer Leiter verbunden ist, wobei der erste RH einen Prozessor (803) und einen Speicher (804) umfasst, wobei der Speicher durch den Prozessor ausführbare Anweisungen enthält, der erste RH (21) ist betreibbar für:

Empfangen eines Signals ausgehend von der IRU über einen ersten (41) der Vielzahl von metallischen Leitern, das für eine Benutzereinrichtung UE (60) bestimmt ist, die drahtlos mit dem ersten RH verbunden ist, wobei das Signal ein oder mehrere Symbole umfasst;

Erkennen, aus dem empfangenen einen oder den empfangenen mehreren Symbolen, einer Fehlermessung des einen oder der mehreren Symbole; und

Senden der Messung des einen oder der mehreren Symbolfehler an die IRU zur weiteren Aktualisierung von Vorcodierungskoeffizienten für einen Vorcodierer der IRU basierend auf der empfangenen Messung des Symbolfehlers,

wobei das eine oder die mehreren Symbole ein Referenzsignalsymbol sind, das an den ersten RH auf der gleichen Frequenz und im gleichen Zeitfenster wie die an einen zweiten RH gesendeten Signale gesendet wird.

**12.** Computerprogramm (605), das computerlesbare Code-Mittel umfasst, die in einem Netzknoten (600) eines drahtlosen Kommunikationsnetzes ausgeführt werden sollen, das so konfiguriert ist, dass es das Nebensprechen eines Basisstationssystems (100) abmildert, wobei das Basisstationssystem eine IRU (10), eine BBU (30), die mit der IRU verbunden ist, und eine Vielzahl von RH (21-26), die mit der IRU über eine Vielzahl von metallischen Leitern verbunden sind, umfasst, wobei dieses computerlesbare Code-Mittel, wenn es im Netzknoten ausgeführt wird, den Netzknoten (600) dazu veranlasst, das Verfahren nach einem der Ansprüche 1-4 auszuführen.

**13.** Träger, der das Computerprogramm (605) nach Anspruch 12 enthält, wobei der Träger eines der Folgenden ist: ein elektronisches Signal, ein optisches Signal, ein Funksignal oder ein computerlesbares Speichermedium.

**14.** Computerprogramm (805), das computerlesbare Code-Mittel umfasst, die in einem ersten Funkkopf, RH, (21) ausgeführt werden sollen, der in einem Basisstationssystem (100) eines drahtlosen Kommunikationsnetzes betreibbar ist, wobei die Basisstation eine IRU (10), eine mit der IRU verbundene BBU (30) und eine Vielzahl von RH (21-26) umfasst, einschließlich des ersten RH, wobei die Vielzahl von RH mit der IRU über eine Vielzahl metallischer Leiter verbunden sind, wobei dieses computerlesbare Code-Mittel, wenn es im ersten RH ausgeführt wird, den ersten RH (21) dazu veranlasst, das Verfahren nach einem der Ansprüche 5-6 auszuführen.

**15.** Träger, der das Computerprogramm (805) nach Anspruch 14 enthält, wobei der Träger eines der Folgenden ist: ein elektronisches Signal, ein optisches Signal, ein Funksignal oder ein computerlesbares Speichermedium.

**Revendications**

**1.** Procédé d'atténuation de diaphonie mis en oeuvre par un noeud de réseau d'un réseau de communication sans fil exploitable dans un système de station de base (100) du réseau de communication sans fil, le système de station de base comprenant une unité radio intermédiaire, IRU (10), une unité de bande de base, BBU (30), connectée à l'IRU et une pluralité de sources radio, RH (21-26) connectées à l'IRU via une pluralité de conducteurs métalliques, le procédé comprenant :

la réception (204) depuis une première (21) parmi la pluralité de RH, d'une mesure d'une erreur d'un ou plusieurs symboles d'un signal reçu par la première RH depuis l'IRU sur un premier parmi la pluralité de conducteurs métalliques, la mesure de l'erreur étant détectée par la première RH, le signal étant destiné à un équipement d'utilisateur, UE (60), connecté sans fil à la première RH (21),

la détermination (206) de coefficients de précodage pour un précodeur selon la mesure d'erreur reçue, et

le déclenchement d'application (208) des coefficients de précodage déterminés lors de l'envoi de signaux supplémentaires à la première RH sur le premier parmi la pluralité de conducteurs métalliques, les signaux supplémentaires étant destinés à des UE connectés sans fil à la première RH, et

le déclenchement d'envoi (202), à la première parmi la pluralité de RH, du signal destiné à l'UE connecté à la première parmi la pluralité de RH, et

le déclenchement d'envoi (210), à une deuxième parmi la pluralité de RH, d'un signal destiné à un UE connecté à la deuxième parmi la pluralité de RH, le signal envoyé à la deuxième RH comprenant un symbole de signal de référence, dans lequel le signal envoyé à la première RH et le signal envoyé à la deuxième RH sont envoyés dans la même fréquence et le même créneau horaire.

**2.** Procédé selon la revendication 1, dans lequel le ou les symboles sont un symbole de données.

**3.** Procédé selon la revendication 1, dans lequel le ou les symboles sont un symbole de signal de référence.

**4.** Procédé selon la revendication 3, dans lequel le symbole de signal de référence est un symbole de signal de référence spécifique de la cellule, CRS.

**5.** Procédé mis en oeuvre par une première source radio, RH, (21) exploitable dans un système de station de base (100) d'un réseau de communication sans fil, pour l'atténuation de diaphonie, le système de station de base comprenant une unité radio intermédiaire, IRU (10) une unité de bande de base, BBU (30) connectée à l'IRU, et une pluralité de RH (21-26) incluant la première RH (21), la pluralité de RH étant connectée à l'IRU via une pluralité de conducteurs métalliques, le procédé comprenant :

la réception (302), depuis l'IRU sur un premier (41) parmi la pluralité de conducteurs métalliques, d'un signal destiné à un équipement d'utilisateur, UE (60) connecté sans fil à la première RH, le signal comprenant un ou plusieurs symboles ;

la détection (304), à partir du ou des symboles reçus, d'une mesure d'une erreur du ou des symboles ;

l'envoi (306), à l'IRU, de la mesure d'erreur du ou des symboles, pour une mise à jour supplémentaire de coefficients de précodage pour un pré-codeur de l'IRU sur la base de la mesure d'erreur de symbole reçue dans lequel le ou les symboles sont un symbole de signal de référence envoyé à la première RH dans la même fréquence et le même créneau horaire que des signaux envoyés à une deuxième RH.

**6.** Procédé selon la revendication 5, dans lequel le symbole de signal de référence est un symbole de signal de référence spécifique de la cellule, CRS.

**7.** Noeud de réseau (600) exploitable dans un réseau de communication sans fil, configuré pour atténuer une diaphonie d'un système de station de base (100), le système de station de base comprenant une IRU (10), une BBU (30) connectée à l'IRU, et une pluralité de RH (21-26) connectées à l'IRU via une pluralité de conducteurs métalliques, le noeud de réseau (600) comprenant un processeur (603) et une mémoire (604), ladite mémoire contenant des instructions exécutables par ledit processeur, moyennant quoi le noeud de réseau (600) est opérationnel pour :

recevoir d'une première (21) parmi la pluralité de RH, une mesure d'une erreur d'un ou plusieurs symboles d'un signal reçu par la première RH depuis l'IRU sur un premier parmi la pluralité de conducteurs métalliques, la mesure de l'erreur étant détectée par la première RH, le signal étant destiné à un équipement d'utilisateur, UE (60), connecté sans fil à la première RH (21),

déterminer des coefficients de précodage pour un précodeur selon la mesure d'erreur reçue, et

déclencher une application des coefficients de précodage déterminés lors de l'envoi de signaux supplémentaires à la première RH sur le premier parmi la pluralité de conducteurs métalliques, les signaux supplémentaires étant destinés à des UE connectés sans fil à la première RH, et

déclencher un envoi, à la première parmi la pluralité de RH, du signal destiné à l'UE connecté à la première parmi la pluralité de RH, et

déclencher un envoi, à une deuxième parmi la pluralité de RH, d'un signal destiné à un UE connecté au deuxième parmi la pluralité de RH, le signal envoyé à la deuxième RH comprenant un symbole de signal de référence, dans lequel le signal envoyé à la première RH et le signal envoyé à la deuxième RH sont envoyés dans la même fréquence et le même créneau horaire.

**8.** Noeud de réseau selon la revendication 7, dans lequel le ou les symboles sont un symbole de données.

**9.** Noeud de réseau selon la revendication 7, dans lequel le ou les symboles sont un symbole de signal de référence.

**10.** Noeud de réseau selon la revendication 9, dans lequel le symbole de signal de référence est un symbole de signal de référence spécifique de la cellule, CRS.

**11.** Première source radio, RH, (21) exploitable dans un système de station de base (100) d'un réseau de communication sans fil, configurée pour contribuer à une atténuation de diaphonie, le système de station de base comprenant une IRU (10), une BBU (30) connectée à l'IRU, et une pluralité de RH (21-26) incluant la première RH, la pluralité de RH étant connectée à l'IRU via une pluralité de conducteurs métalliques, la première RH comprenant un processeur (803) et une mémoire (804), ladite mémoire contenant des instructions exécutables par ledit processeur, la première RH (21) est opérationnelle pour :

recevoir, depuis l'IRU sur un premier (41) parmi la pluralité de conducteurs métalliques, un signal destiné à un équipement d'utilisateur, UE (60) connecté sans fil à la première RH, le signal comprenant un ou plusieurs symboles ;

détecter, à partir du ou des symboles reçus, une mesure d'une erreur du ou des symboles ; et

envoyer, à l'IRU, la mesure d'erreur du ou des symboles, pour une mise à jour supplémentaire de coefficients de précodage pour un précodeur de l'IRU sur la base de la mesure d'erreur de symbole reçue dans lequel le ou les symboles sont un symbole de signal de référence envoyé à la première RH dans la même fréquence et le même créneau horaire que des signaux envoyés à une deuxième RH.

**12.** Programme informatique (605) comprenant des moyens de code lisible par un ordinateur destinés à être exécutés dans un noeud de réseau (600) d'un réseau de communication sans fil, configuré pour atténuer une diaphonie d'un système de station de base (100), le système de station de base comprenant une IRU (10), une BBU (30) connectée à l'IRU, et une pluralité de RH (21-26) connectées à l'IRU via une pluralité de conducteurs métalliques, lesquels moyens de code lisible par un ordinateur, lorsqu'ils sont exécutés dans le noeud de réseau, amènent le noeud de réseau (600) à mettre en oeuvre le procédé tel que défini dans l'une quelconque des revendications 1 à 4. :

**13.** Porteuse contenant le programme informatique (605) selon la revendication 12, dans laquelle la porteuse est l'un parmi un signal électronique, un signal optique, un signal radio ou un support de stockage lisible par ordinateur.

**14.** Programme informatique (805) comprenant des moyens de code lisible par un ordinateur destinés à être exécutés dans une première source radio, RH, (21) exploitable dans un système de station de base (100) d'un réseau de communication sans fil, le système de station de base comprenant une IRU (10), une BBU (30) connectée à l'IRU, et une pluralité de RH (21-26) incluant la première RH, la pluralité de RH étant connectée à l'IRU via une pluralité de conducteurs métalliques, lesquels moyens de code lisible par un ordinateur lorsqu'ils sont exécutés dans la première RH amènent la première RH (21) à mettre en oeuvre le procédé tel que défini dans l'une quelconque des revendications 5 ou 6.

**15.** Porteuse contenant le programme informatique (805) selon la revendication 14, dans laquelle la porteuse est l'un parmi un signal électronique, un signal optique, un signal radio ou un support de stockage lisible par ordinateur.

Fig. 1

Fig. 2

Triggering sending a synchronization signal to the RHs — 201

Triggering sending to first RH signal comprising symbol — 202

Triggering sending to second RH signal comprising symbol — 210

Receiving from first RH a symbol error measure — 204

Determining precoding coefficients — 206

Triggering application of the determined coefficients — 208

Fig. 3

Receiving, from the IRU, a signal comprising a symbol — 302

Detecting a measure of symbol error — 304

Sending, to the IRU, the symbol error measure — 306

Fig. 4

| 350 | 352 | 354 | 356 | 358 | 360 | 362 |
|-----|-----|-----|-----|-----|-----|-----|
| AFE | LP filter | A/D | DSP | D/A | Up-converter | RF FE |

CPU — 364

Control channel through which
error sample is fed back to IRU

Fig. 5

Fig. 6

error sample feedback path

Fig. 7

| | | | | | | | | | | | | |
|---|---|---|---|---|---|---|---|---|---|---|---|---|
| | | | | | | | | | | | | |
| XXXX | | | | R0 | | | XXXX | | | | R0 | |
| | | | | | | | | | | | | |
| R0 | | | | XXXX | | | R0 | | | | XXXX | |
| | | | | | | | | | | | | |
| XXXX | | | | R0 | | | XXXX | | | | R0 | |
| | | | | | | | | | | | | |
| R0 | | | | XXXX | | | R0 | | | | XXXX | |

Fig. 8a

| | | | | | | | | | | | | |
|---|---|---|---|---|---|---|---|---|---|---|---|---|
| | | | | | | | | | | | | |
| R1 | | | | XXXX | | | R1 | | | | XXXX | |
| | | | | | | | | | | | | |
| XXXX | | | | R1 | | | XXXX | | | | R1 | |
| | | | | | | | | | | | | |
| R1 | | | | XXXX | | | R1 | | | | XXXX | |
| | | | | | | | | | | | | |
| XXXX | | | | R1 | | | XXXX | | | | R1 | |

Fig. 8b

21

| SYMB1 | SYMB2 | SYMB3 | SYMB4 | SYMB5 | SYMB6 | SYMB7 |
|---|---|---|---|---|---|---|
|  |  |  |  |  |  |  |
|  |  |  |  |  |  |  |
|  |  |  |  | 0,6,12,18 |  |  |
|  |  |  |  |  |  |  |
|  |  |  |  |  |  |  |
| 0,6,12,18 |  |  |  |  |  |  |
|  |  |  |  |  |  |  |
|  |  |  |  |  |  |  |
|  |  |  |  | 0,6,12,18 |  |  |
|  |  |  |  |  |  |  |
|  |  |  |  |  |  |  |
| 0,6,12,18 |  |  |  |  |  |  |

Fig. 9

Fig. 10

Fig. 11

802

Communication unit

801

803

Processor

804

Memory

805

Computer program

Storage unit

806

Further functionality

807

Radio head
21

## Fig. 12

Communication unit

802

806

Storage unit

904

Receiving module

906

Detecting module

908

Sending module

Radio head
21

## Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015002584 A1

- EP 2736210 A

**Non-patent literature cited in the description**

- **GAMBINI et al.** Wireless over cable for femtocell systems. *IEEE COMMUNICATIONS MAGAZINE,* 01 May 2013, vol. 51 (5), 178-185